# EUROPÄISCHE PATENTSCHRIFT

(11) **EP 1 046 217 B1**
(45) Veröffentlichungstag und Bekanntmachung des Hinweises auf die Patenterteilung: **22.08.2007**
(21) Anmeldenummer: 99942717.2
(22) Anmeldetag: 30.06.1999
(51) Int. Cl.: H02K 11/00, G01P 3/487

(54) **ELEKTRISCHER MOTOR**
ELECTRIC MOTOR
MOTEUR ELECTRIQUE

(30) Priorität: 09.10.1998 DE 19846501
(43) Veröffentlichungstag der Anmeldung: 25.10.2000
(73) Patentinhaber: ROBERT BOSCH GMBH, 70442 Stuttgart (DE)
(72) Erfinder: SCHILLER, Herbert, D-77830 Bühlertal (DE)
(86) Internationale Anmeldenummer: PCT/DE1999/001896
(87) Internationale Veröffentlichungsnummer: WO 2000/022718

(56) Entgegenhaltungen:
- EP-A- 0 601 228
- DE-A- 19 710 015

## Beschreibung

### Stand der Technik

Die Erfindung geht aus von einem elektrischen Motor, insbesondere Kommutatormotor, nach dem Oberbegriff des Anspruchs 1.

Solche elektrischen Motoren werden bei Kraftfahrzeugen als Antriebsmotoren für Fensterheber, Schiebedachbetätiger, Sitzversteller, Spiegelversteller u.dgl., verwendet und gestatten vorbestimmte Einstellpositionen hochgenau einzustellen. Die Umdrehungs- und/oder Drehzahlabtastung erfolgt mittels eines raumfest angeordneten Hall-Sensors, der die vom zwei- oder mehrpoligen Ringmagneten bei jeder Umdrehung abgegebenen Magnetimpulse detektiert.

Bei einem bekannten Motor dieser Art (DE 197 10 015 A1) ist der Trägering aus Kunststoff gefertigt, der zu einer Stirnseite hin eine konusförmige Verjüngung aufweist und zur anderen Seite hin eine keilförmige Aussparung hat. Auf der Seite der keilförmigen Aussparung ist ein zweipoliger Ringmagnet aufgespritzt, wobei die keilförmige Aussparung eine gute Verbindung zwischen Ringmagnet und Trägerring bewirkt. Der Trägerring ist mit Preßsitz auf die Rotorwelle, aufgeschoben wodurch die Montage erleichtert und auf Klebstoff zum Fixieren verzichtet werden kann. Der Preßsitz ist so gewählt, daß er die erforderlichen tangentialen und axialen Kräfte aufnimmt. Die Herstellung des Trägerrings aus Kunststoff ermöglicht den Preßsitz, ohne daß der Ringmagnet durch mechanische Spannungen reißt, weil der weiche Kunststoff die durch die Pressung erzeugten Spannungen aufnimmt. Die vordere Konusform des Trägerrings dient dazu, bei der Montage die Kommutatorbürsten auseinanderzuschieben, so daß auf ein gesondertes Hilfswerkzeug zum Auseinanderspreizen der Kommutatorbürsten zwecks Durchschieben des auf der Rotorwelle sitzenden Magnetkörpers verzichtet werden kann und damit die Montage erleichtert wird. Bei endmontiertem Motor ist der Trägerring mit Ringmagnet auf der Rotorwelle unmittelbar vor den Kommutatorbürsten und hinter einem gehäusefesten Wellenlager positioniert und stützt mit seiner Stirnseite die Rotorwelle in axialer Richtung am Wellenlager ab, solange noch kein Getriebe am Motor angeschlossen ist.

EP 0 601 228 zeigt einen elektrischen Motor gemäß der Pröambel des Anspruchs 1.

### Vorteile der Erfindung

Der erfindungsgemäße elektrische Motor mit den Merkmalen des Anspruchs 1 hat den Vorteil, daß der Ringmagnet vom Trägerring außerhalb von dessen Preßpassung aufgenommen ist und daher die durch den Preßsitz erzeugten Spannungen nicht zu dem bruchempfindlichen Ringmagnet gelangen können, insbesondere dann nicht, wenn gemäß einer bevorzugten Ausführungsform der Erfindung der Bereich des zweiten Ringabschnitts geschlitzt ausgebildet ist. Damit ist es möglich, den Trägerring als Metall- oder Sinterring auszuführen, der einen Preßsitz mit großer Kraftübertragung auf die Rotorwelle erlaubt, was für schnellaufende Elektromotoren wünschenswert ist. Außerdem eignet sich ein Metallring sehr gut zum Anlaufen gegen ein gehäusefestes Sinterlager der Rotorwelle. Auch wechselnde Temperatureinflüsse führen nicht zu den Ringmagneten gefährdenden Spannungen im zweiten Ringabschnitt des Trägerrings.

Durch die in den weiteren Ansprüchen aufgeführten Maßnahmen sind vorteilhafte Weiterbildungen und Verbesserungen des im Anspruch 1 angegebenen elektrischen Motors möglich.

Gemäß einer bevorzugten Ausführungsform der Erfindung ist der den Ringmagnet aufnehmende Außenmantel des zweiten Ringabschnitts mit tannenzapfenartigen, axialen, radialen oder gekreuzten Rippen versehen. Diese Verrippung sorgt für ein ausreichend festen Sitz des Ringmagneten auf dem Trägerring. Ein aus Plastoferrit gefertigter Ringmagnet verkrallt sich in dieser Verrippung durch Relaxation.

Gemäß einer vorteilhaften Ausführungsform der Erfindung ist der Trägerring aus nichtmagnetischem Material hergestellt, so daß ein Flußverlust durch Rückschluß im ersten Ringabschnitt vermieden wird.

Gemäß einer vorteilhaften Ausführungsform der Erfindung ist der Trägerring aus einem gleitfähigen Material, z.B. Rotguß, Messing o.dgl., hergestellt. Durch die gute Gleitfähigkeit des Trägerrings kann die übliche Kunststoffanlaufscheibe entfallen und der Trägerring unmittelbar gegen das Wellenlager anlaufen. Beim Zusammenbau des Motors wird dabei das Längsspiel der Rotor- oder Ankerwelle durch Überdrücken eines das Wellenlager aufnehmenden Kunststofflagerschilds auf das durch unterschiedliche Wärmeausdehnungen erforderliche Minimum eingestellt.

### Zeichnung

Die Erfindung ist anhand eines in der Zeichnung dargestellten Ausführungsbeispiels in der nachfolgenden Beschreibung näher erläutert. Es zeigen:
- Fig. 1: einen Längsschnitt eines elektrischen Kommutatormotors,
- Fig. 2: eine vergrößerte Darstellung eines mit der Rotorwelle umlaufenden Magnetkörpers im Kommutatormotor gemäß Fig. 1,
- Fig. 3: eine gleiche Darstellung wie in Fig. 2 bei entferntem Ringmagnet.

### Beschreibung des Ausführungsbeispiels

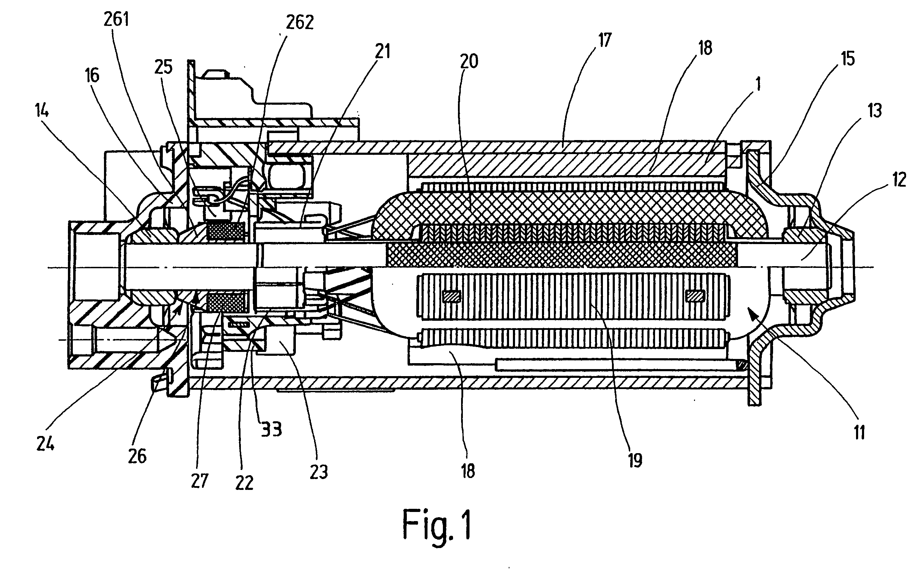

Der in Fig. 1 im Längsschnitt dargestellte Kommutatormotor ist als Antriebsmotor für Fensterheber, Schiebedachbetätiger, Sitzversteller, Spiegelversteller u.dgl. in Kraftfahrzeugen vorgesehen. Er weist einen in zwei Drehrichtungen antreibbaren Rotor 11 auf, dessen Rotorwelle 12 beidseitig in je einem Kalottenlager 13,14 gelagert ist. Die beiden Kalottenlager 13,14 sind jeweils in einem Lagerschild 15,16 aufgenommen ,die jeweils eine Stirnseite eines Motorgehäuses 17 abschließen. Das zylindrisch ausgebildete Motorgehäuse 17 trägt auf seiner Innenseite Permanentmagnetsegmente 18, deren Anzahl der Zahl der Magnetpole entspricht und die den Rotor 11 mit Spaltabstand umgeben. Der Rotor 11 nimmt in in einem Eisenblechpaket 19 eingebrachten Ankernuten eine Ankerwicklung 20 auf, die mit einem auf der Rotorwelle 11 befestigten Kommutator 21 elektrisch verbunden ist. Auf dem Kommutator 21 sind eine Anzahl der Pole des Motors entsprechende Zahl von Kohlebürsten 22 radial aufgesetzt, die in einem Bürstenschacht 23 radial verschieblich gelagert sind und von einer Bürstenandruckfeder auf die Oberfläche des Kommutators 21 aufgepreßt werden. Die Rotorwelle 11 trägt zwischen dem Kalottenlager 14 und dem Kommutator 21 einen Magnetkörper 24, der zur Umdrehungs- und/oder Drehzahlerfassung mit einem Hall-Sensor 25 oder Hall-IC zusammenwirkt, der beispielsweise an einem die Bürstenschächte 23 tragenden Bürstenhalter 33 fest angeordnet ist.

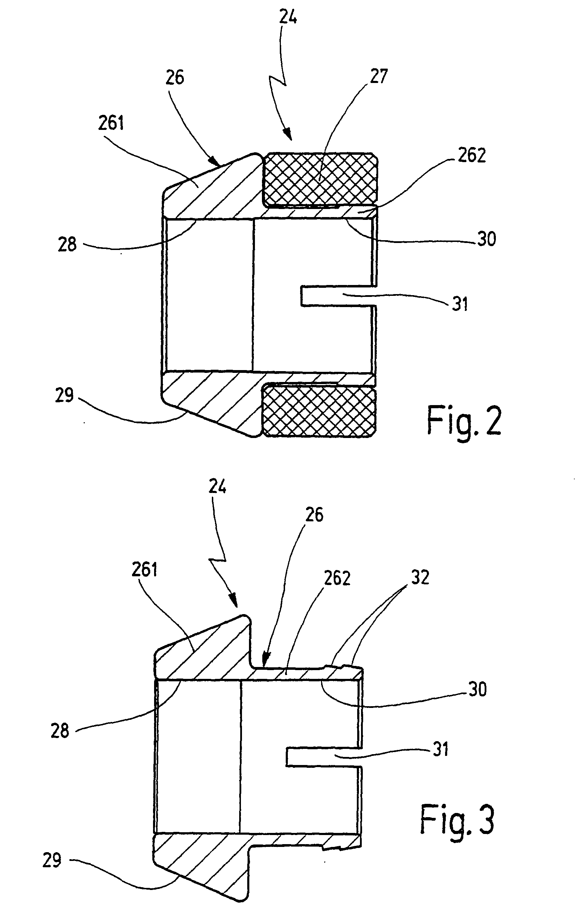

Der in Fig. 2 vergrößert im Längsschnitt dargestellte Magnetkörper 24 weist einen Trägerring 26, der als Metallring oder Sinterring ausgeführt ist, und einen vom Trägerring 26 aufgenommenen zwei- ode mehrpoligen Ringmagneten 27 auf. Der in Fig. 3 ohne Ringmagneten 27 dargestellte Trägerring 26 besitzt einen ersten Ringabschnitt 261 mit einer Preßpassung 28 zur Erzeugung eines Preßsitzes auf der Rotorwelle 12 und einen in Axialrichtung benachbarten zweiten Ringabschnitt 262 mit einer Innenbohrung 30, deren lichter Durchmesser größer ist als der Außendurchmesser der Rotorwelle 12. Der erste Ringabschnitt 261 weist einen Außenmantel 29 auf, der sich zu der vom zweiten Ringabschnitt 262 abgekehrten Stirnseite des Trägerrings 26 konisch verjüngt. Der zweite Ringabschnitt 262 ist axial geschlitzt, wobei der mindestens eine Schlitz 31 von der vom ersten Ringabschnitt 262 abgekehrten Stirnseite des Trägerrings 26 aus eingebracht ist. Der Außenmantel des zweiten Ringabschnitts 262, der einen kleineren Durchmesser aufweist als der Außenmantel 29 des ersten Ringabschnitts 261, ist mit Rippen 32 versehen.

Im Ausführungsbeispiel der Fig. 3 sind die Rippen als Tannenzapfenprofil mit zwei axial hintereinander angeordneten, sich zum freien Ende hin konisch verjüngenden Kränzen ausgebildet. Es können aber auch axiale, radiale oder gekreuzte Rippen vorgesehen werden. Der bruchempfindliche Ringmagnet 27, der vorzugsweise aus Plastoferrit gespritzt ist, wird mit leichter Pressung auf den zweiten Ringabschnitt 262 aufgedrückt (Fig. 2). Die Rippen 32 sorgen für einen ausreichend festen Sitz, und der Ringmagnet 27 verkrallt sich durch Relaxation. Alternativ kann der Ringmagnet 27 auch unmittelbar auf den zweiten Ringabschnitt 262 aufgespritzt werden. Der Trägerring 26 ist aus nichtmagnetischem Material gefertigt, um Flußverluste durch Rückschluß an der Konusseite zu vermeiden. Bevorzugt wird ein gleitfähiges Material, wie Rotguß, Messing o.dgl. verwendet, um eine geringe Reibung beim Anlaufen gegen das vorzugsweise aus Sintermaterial gefertigte Kalottenlager 14 zu gewährleisten. Im Bereich der Preßpassung 28 ist der Innendurchmesser des ersten Ringabschnitts 261 auf den Außendurchmesser der Rotorwelle 12 so abgestimmt, daß der sich ergebende Preßsitz auf der Rotorwelle 12 eine Kraftübertragung auf die Rotorwelle 12 in Axialrichtung von mindestens 1000 N gewährleistet.

Bei der Montage des Kommutatormotors wird der fertig montierte Rotor 11 mit auf der Rotorwelle 12 durch Preßsitz festgelegtem Magnetkörper 24, der so aufgepreßt ist, daß nach dem Aufsetzen des Lagerschildes 16 kein Ankerlängsspiel vorhanden ist, in das Motorgehäuse 13 eingeführt. Danach wird der Bürstenhalter 33 aufgesetzt. Dabei bewirkt der Magnetkörper durch den konusförmigen ersten Ringabschnitt 261 das Aufspreizen der Kohlebürsten 22, so daß auf ein zusätzliches Montagewerkzeug verzichtet werden kann. Nach endmontiertem Kommutatormotor liegt der Magnetkörper 24 unmittelbar zwischen dem Kommutator 21 und dem Kalottenlager 14. Das Ankerlängsspiel wird durch Überdrücken des aus Kunststoff gefertigten Lagerschilds 16 und das dadurch bewirkte Verschieben des Magnetkörpers 24 auf das durch unterschiedliche Wärmeausdehnung erforderliche Minimum eingestellt.

## Patentansprüche

1. Elektrischer Motor, insbesondere Kommutatormotor, mit einem zur Umdrehungs- und/oder Drehzahlabtastung auf einer Rotorwelle (12) drehfest angeordneten Magnetkörper (24), der einen mit Presssitz auf der Rotorwelle (12) sitzenden Trägerring (26) und einem vom Trägerring (26) aufgenommenen, mehrpoligen Ringmagneten (27) aufweist, wobei der Trägerring (26) einen ersten Ringabschnitt (261) für den Presssitz auf der Rotorwelle (12) und einen in Axialrichtung benachbarten zweiten Ringabschnitt (262) mit gegenüber dem Außendurchmesser der Rotorwelle (12) größerem Innendurchmesser für die Aufnahme des Ringmagneten (27) aufweist, wobei der zweite Ringabschnitt (262) geschlitzt ist und dass der mindestens eine Schlitz (31) von der vom ersten Ringabschnitt (261) abgekehrten Stirnseite des Trägerkörpers (26) aus eingebracht ist, **dadurch gekennzeichnet, dass** der Außenmantel des zweiten Ringabschnitts (262) den Ringmagneten (27) aufnimmt.

2. Motor nach Anspruch 1, **dadurch gekennzeichnet, dass** der den Ringmagneten (27) aufnehmende Außenmantel des zweiten Ringabschnitts (262) mit Rippen (32) versehen ist.

3. Motor nach einem der Ansprüche 1 oder 2, **dadurch gekennzeichnet, dass** der endgefertigte Ringmagnet (27) mit leichter Pressung auf den zweiten Ringabschnitt (262) aufgedrückt ist.

4. Motor nach einem der Ansprüche 1 bis 3, **dadurch gekennzeichnet, dass** der Ringmagnet (27) aus Plastoferrit gespritzt ist.

5. Motor nach einem der Ansprüche 1 bis 4, **dadurch gekennzeichnet, dass** der Trägerring (26) ein Metall- oder Sinterring ist.

6. Motor nach einem der Ansprüche 1 bis 5, **dadurch gekennzeichnet, dass** der Trägerring (26) aus einem gleitfähigen Material, z. B. Rotguss, Messing, hergestellt ist.

7. Motor nach einem der Ansprüche 1 bis 6, **dadurch gekennzeichnet, dass** der Trägerring (26) aus nichtmagnetischem Material hergestellt ist.

8. Motor nach einem der Ansprüche 1 bis 7, **dadurch gekennzeichnet, dass** der Innendurchmesser des ersten Ringabschnitts (261) auf den Außendurchmesser der Rotorwelle (12) so abgestimmt ist, dass der sich ergebende Presssitz eine Kraftübertragung auf die Rotorwelle (12) in Axialrichtung von gleich oder größer 1000 N gewährleistet.

## Claims

1. Electric motor, in particular commutator motor, having a magnet body (24), which is arranged such that it is fixed against rotation on a rotor shaft (12) for the purpose of revolution and/or rotation speed sensing and has a support ring (26) resting with a press fit on the rotor shaft (12) and a multi-pole ring magnet (27), which is accommodated by the support ring (26), the support ring (26) having a first ring section (261) for the press fit on the rotor shaft (12) and a second ring section (262), which is adjacent in the axial direction, with an inner diameter which is greater than the outer diameter of the rotor shaft (12) for accommodating the ring magnet (27), the second ring section (262) being provided with slits, and the at least one slit (31) being introduced from that end side of the support body (26) which faces away from the first ring section (261), **characterized in that** the outer casing of the second ring section (262) accommodates the ring magnet (27).

2. Motor according to Claim 1, **characterized in that** the outer casing, which accommodates the ring magnet (27), of the second ring section (262) is provided with ribs (32).

3. Motor according to either of Claims 1 and 2, **characterized in that** the completely manufactured ring magnet (27) is pressed onto the second ring section (262) with slight pressure.

4. Motor according to one of Claims 1 to 3, **characterized in that** the ring magnet (27) is injection-moulded from plastoferrite.

5. Motor according to one of Claims 1 to 4, **characterized in that** the support ring (26) is a metal ring or a sintered ring.

6. Motor according to one of Claims 1 to 5, **characterized in that** the support ring (26) is produced from a material with sliding properties, for example red brass, yellow brass.

7. Motor according to one of Claims 1 to 6, **characterized in that** the support ring (26) is produced from a nonmagnetic material.

8. Motor according to one of Claims 1 to 7, **characterized in that** the inner diameter of the first ring section (261) is matched to the outer diameter of the rotor shaft (12) such that the resultant press fit ensures a force transfer to the rotor shaft (12) in the axial direction of equal to or greater than 1000 N.

## Revendications

1. Moteur électrique, en particulier moteur à collecteur avec, un corps magnétique (24) qui, monté solidaire en rotation d'un arbre de rotor afin de détecter la rotation et/ou le nombre de tours de celui-ci, présente une bague porteuse (26) montée serrée sur l'arbre de rotor (12) et un aimant torique (27) multipolaire monté sur la bague porteuse (26), celle-ci comprenant un premier segment annulaire (261) assurant le montage serré sur l'arbre de rotor (12) et, pour accueillir l'aimant torique (27), un second segment annulaire (262) axialement voisin dont le diamètre interne est supérieur au diamètre externe de l'arbre de rotor (12), ce second segment annulaire (262) présentant au moins une fente (31) partant de la face frontale du corps porteur (22) éloignée du premier segment annulaire (261),
**caractérisé en ce que**
la surface externe du second segment annulaire (262) reçoit l'aimant torique.

2. Moteur électrique selon la revendication 1,
**caractérisé en ce que**
la surface externe du second segment annulaire (262) recevant l'aimant torique (27) est munie de nervures (32).

3. Moteur électrique selon la revendication 1 ou 2,
**caractérisé en ce que**
l'aimant torique (27), à l'état final, est appliqué avec une légère pression sur le second segment annulaire (262).

4. Moteur électrique selon une des revendications 1 à 3,
**caractérisé en ce que**
l'aimant torique (27) est en plastoferrite.

5. Moteur électrique selon une des revendications 1 à 4,
**caractérisé en ce que**
l'aimant torique (27) est en métal ou en matériau fritté.

6. Moteur électrique selon une des revendications 1 à 5,
**caractérisé en ce que**
la bague porteuse (26) est faite d'un matériau apte au glissement, tel que du bronze rouge ou du laiton.

7. Moteur électrique selon une des revendications 1 à 6,
**caractérisé en ce que**
la bague porteuse (26) est en matériau non magnétique.

8. Moteur électrique selon une des revendications 1 à 7,
**caractérisé en ce que**
le diamètre interne du premier segment annulaire (261) est ajusté au diamètre externe de l'arbre de rotor pour permettre au serrage résultant de transmettre à l'arbre de rotor (12), en direction axiale, une force au moins égale à 1000 N.
